# EUROPEAN PATENT SPECIFICATION

(11) **EP 1 861 851 B1**
(45) Date of publication and mention of the grant of the patent: **30.07.2008**
(21) Application number: 05817154.7
(22) Date of filing: 22.11.2005
(51) Int. Cl.: G11B 7/09

(54) **ACTUATOR FOR AN OPTICAL SCANNER**
AKTOR FÜR EINEN OPTISCHEN SCANNER
ACTIONNEUR POUR TÊTE DE LECTURE OPTIQUE

(30) Priority: 09.12.2004 DE 102004059587; 31.03.2005 EP 05102532
(43) Date of publication of application: 05.12.2007
(73) Proprietor: Thomson Licensing S.A., 92100 Boulogne-Billancourt (FR)
(72) Inventor: BAMMERT, Michael, 78739 Hardt (DE); SUZUKI, Tsuneo, 78087 Mönchweiler (DE); DUPPER, Rolf, 78050 Villingen-Schwenningen (DE)
(74) Representative: Schmidt-Uhlig, Thomas
(86) International application number: PCT/EP2005/056135
(87) International publication number: WO 2006/061322

(56) References cited:
- US-A- 5 663 840
- US-A1- 2003 058 550
- PATENT ABSTRACTS OF JAPAN vol. 2002, no. 12, 12 December 2002 (2002-12-12) -& JP 2002 245647 A (MATSUSHITA ELECTRIC IND CO LTD), 30 August 2002 (2002-08-30)
- PATENT ABSTRACTS OF JAPAN vol. 2002, no. 11, 6 November 2002 (2002-11-06) -& JP 2002 208152 A (PIONEER ELECTRONIC CORP), 26 July 2002 (2002-07-26)

## Description

The present invention relates to an actuator for a scanner for optical storage media, and to an appliance for reading from and/or writing to optical storage media which uses an actuator such as this.

Actuators for optical scanners generally use wound coils in conjunction with permanent magnets, in order to focus a light beam for reading from and/or writing to an optical storage medium onto an information layer of the optical storage medium. The actuator in this case controls both the tracking and the focussing of the focus relative to a data track in the information layer of the optical storage medium.

Printed coils are also used for actuators, instead of wound coils. These are printed circuits with printed copper tracks, that is to say the copper tracks run parallel to the magnet. Fundamentally, this principle operates in the same way as that of wound coils. The advantages of printed coils include a simple process for assembly of the actuator, saving of winding machines, and a lower second actuator resonance. However, conventional coils are very much more variable, in terms of the wire thickness and the number of windings. In the case of printed coils, the area available for printing of the printed circuits is limited, and the separation between the individual tracks must not be less than a specific amount, either. The number of tracks is thus restricted. Wound coils therefore allow greater actuator sensitivity to be achieved than printed coils.

US-A-5 663 840 describes an actuator having printed coils according to the preamble of claim 1.

One object of the invention is to propose an actuator for an optical scanner, which uses printed coils and at the same time is more sensitive.

According to the invention, this object is achieved by an actuator for an optical scanner, having a lens holder for holding an objective lens and printed coils for focussing and tracking control, with six printed coils being arranged on each of two opposite faces of the lens holder and interacting with associated magnets, each having sixteen poles.

The specific magnetization makes it possible to use a larger area of the lens holder for the arrangement of printed coils. One magnet is fitted to each of two opposite faces of the lens holder, and is magnetized with 16 poles. Alternatively, there may also be two or more magnets in each case, which are correspondingly magnetized and are adhesively bonded together. The use of 16 poles and suitable shaping of the magnets allows six printed coils to be arranged on each of the two faces of the lens holder. This results in a sensitivity increase of 20-30% in comparison to existing actuators with printed coils.

Four printed coils for focussing control and two printed coils for tracking control are preferably used on each of the two faces of the lens holder. The focussing coil can optionally also be used for a tilt function by appropriately selecting the current flow through the coils.

The pole pitch of the magnets advantageously runs obliquely, at least in places, with respect to the printed coils which are provided for tracking control. This allows optimization of the 16-pole magnetization, because the disturbing influences of the magnets for the focussing coils for the tracking coils located alongside them is now reduced. This allows the sensitivity losses to be kept as small as possible.

An actuator according to the invention is preferably used in an appliance for reading from and/or writing to optical storage media.

In order to assist understanding, the invention will be explained in the following text with reference to Figures 1 to 10. The same reference symbols in each case denote identical elements. In the figures:
- Figure 1: shows a scanner for optical storage media, which uses an actuator according to the invention;
- Figure 2: shows the scanner from Figure 1 after removal of a cover;
- Figure 3: shows a further view of the optical scanner from Figure 2;
- Figure 4: shows an actuator according to the invention, without magnets;
- Figure 5: shows the actuator according to the invention, with magnets;
- Figure 6: shows an exploded drawing of the actuator with magnets;
- Figure 7: shows those parts of the printed coils which are relevant for tracking and focussing control;
- Figure 8: shows a schematic explanation relating to the inclined pole pitch;
- Figure 9: shows a schematic illustration of the magnet poles; and
- Figure 10: shows an exploded drawing of an actuator with magnets according to the prior art.

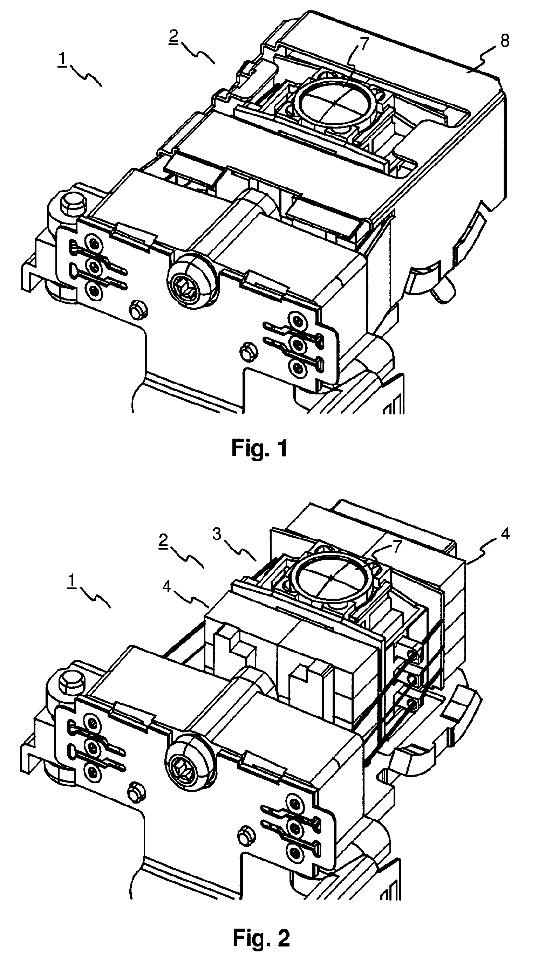

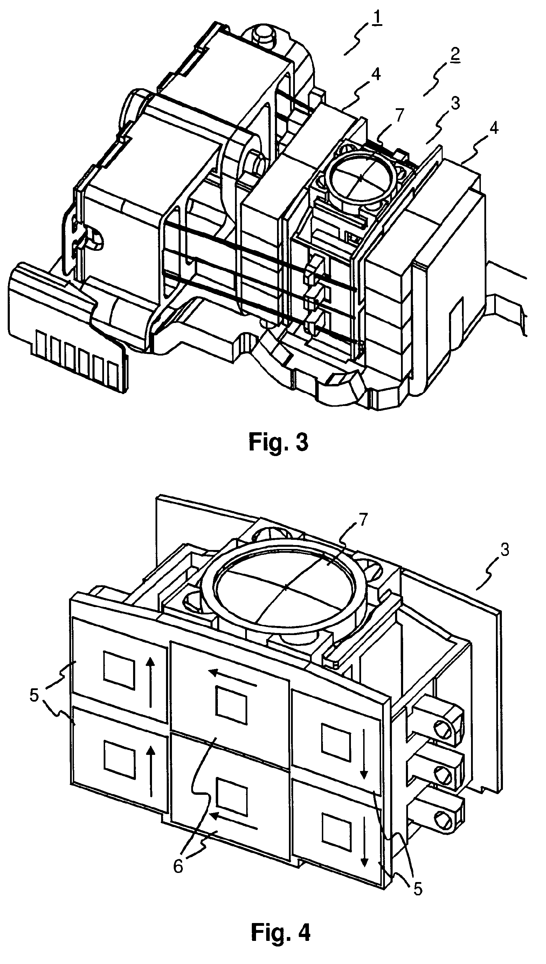

Figure 1 shows a scanner 1 for optical storage media, which uses an actuator 2 according to the invention for focussing and tracking control, by vertical and horizontal movement of an objective lens 7. In the figure, the actuator 2 is partially concealed by a cover 8. The optical scanner 1 is illustrated in Figure 2 after removal of the cover 8. As can now be seen, the actuator 2 has a lens holder 3 for holding the objective lens 7, and two magnets 4 which are arranged at the side of the lens holder 3 and interact with associated printed coils 5, 6 (which cannot be seen in Figure 2) for focussing and tracking control. Figure 3 shows a view of the optical scanner 1 from a different perspective. Further elements of the optical scanner 1 are known to those skilled in the art and will not be explained in any more detail here.

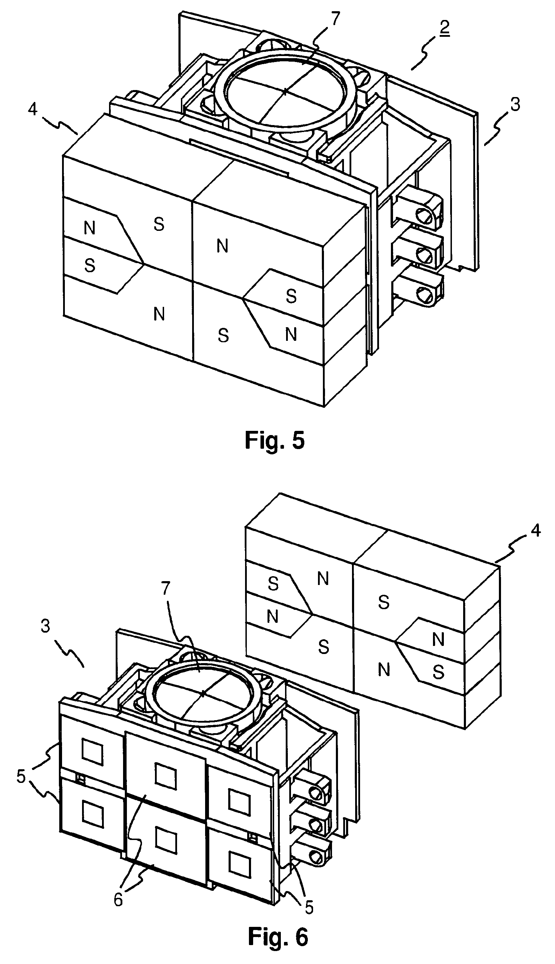

Figure 4 illustrates the lens holder 3 with the printed coils 5, 6, that is to say the actuator 2 without magnets 4. The printed coils 5, 6 each comprise four printed coils 5 for focussing control and two printed coils 6 for tracking control. The arrows that are shown denote the current flow within the printed coils 5, 6. If the magnetization of the magnets 4 is considered in this context, in the form that they are sketched in Figure 5 and Figure 6, then this results in the actuator 2 being moved in accordance with the "right-hand rule". Only eight magnet poles can be seen in each case in Figure 5 and Figure 6. The associated opposing poles are located on the rear face of the magnets 4. The focussing coils 5 can optionally also be used for a tilt function, by appropriately selecting the current flowing through the coils.

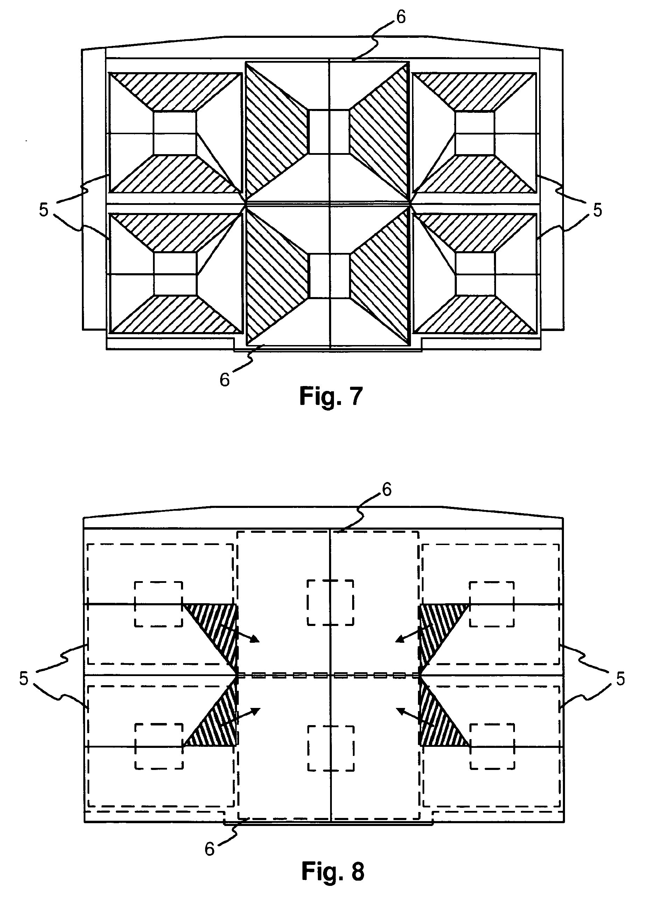

Figure 7 shows those components of the printed coils 5, 6 which are actually relevant for tracking and focussing control. Only the shaded areas contribute to the movement of the lens holder 3. The other components remain unused.

Figure 8 provides an explanation relating to the inclined pole pitch. The inclined pole pitch represents an optimization of the 16-pole magnetization. One advantage of this embodiment over a straight pole pitch is that the disturbing influences of the magnets for the focussing coils 5 on the tracking coils 6, which are located alongside them, are reduced. Appropriate polarization of the magnetization is required for any desired movement. When an opposite magnet pole now acts, this automatically leads to sensitivity losses. With a straight pole pitch, the shaded areas would have a disturbing effect in the direction of the arrow on the tracking coils 6. This is prevented by the special design of the magnet poles. If consideration is also given to the fact that only the upper part and lower part are relevant for the focussing coils 5 as shown in Figure 7, then the inclined pole pitch leads to no sensitivity losses for focussing control.

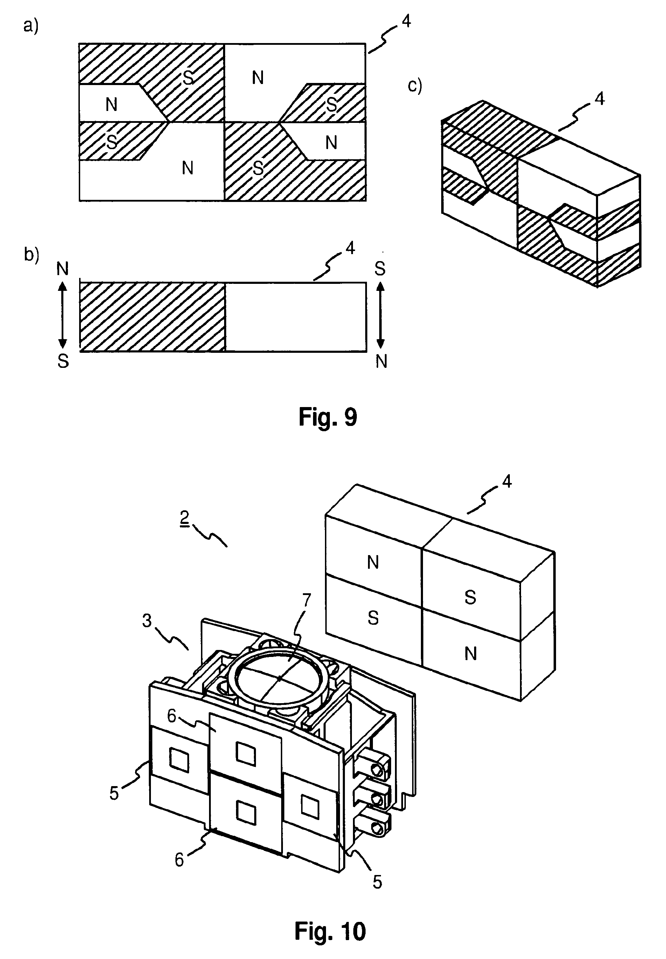

For illustrative purposes, Figure 9 shows a schematic illustration of the magnets 4 in the form of a front view (Figure 9a)), a plan view (Figure 9b)) and a perspective view (Figure 9c)). Mutually adjacent magnet poles with opposite magnetization are in this case emphasized by shading. The shading does not indicate that the magnets 4 are composed of separate parts.

An actuator according to the prior art is shown in Figure 10. This uses magnets 4 with 8-pole magnetization, which interact with two focussing coils 5 and two tracking coils 6. As can easily be seen, the area that is available for the printed coils is not utilized completely. Furthermore, the straight pole pitch results in disturbing influences on the tracking coils 6. Overall, this results in the sensitivity of the actuator 2 being reduced.

## Claims

1. Actuator (2) for an optical scanner (1), having a lens holder (3) for holding an objective lens (7) and printed coils (5, 6) for focussing and tracking control, with the printed coils (5, 6) being arranged on two opposite faces of the lens holder (3) and interacting with associated magnets (4) **characterized in that** six printed coils (5, 6) are arranged on each of the two faces of the lens holder (3), and the magnets (4) each have sixteen poles.

2. Actuator (2) according to Claim 1, **wherein** four printed coils (5) for focussing control and two printed coils (6) for tracking control are arranged on each of the two faces of the lens holder (3).

3. Actuator (2) according to Claim 2, **wherein** the printed coils (5) for focussing control are also used for tilt control of the lens holder (3).

4. Actuator (2) according to one of Claims 1 to 3, **wherein** the pole pitch of the magnets (4) runs obliquely, at least in places, with respect to the printed coils (6) which are provided for tracking control.

5. Actuator according to one of Claims 1 to 4, **wherein** the magnets (4) are each composed of two or more parts, which are adhesively bonded to one another.

6. Appliance for reading from and/or writing to optical storage media, **characterized in that** an optical scanner (1) with an actuator (2) according to one of Claims 1 to 5 is used.

## Patentansprüche

1. Aktuator (2) für einen optischer Abtaster (1), mit einem Linsenhalter (3) zum Halten einer Objektivlinse (7) und gedruckten Spulen (5, 6) zur Fokus- und Spurfolgeregelung, wobei die gedruckten Spulen (5, 6) auf zwei gegenüberliegenden Seiten des Linsenhalters (3) angeordnet sind und mit zugeordneten Magneten (4) zusammenwirken, **dadurch gekennzeichnet, dass** auf den beiden Seiten des Linsenhalters (3) jeweils sechs gedruckte Spulen (5, 6) angeordnet sind und die Magnete (4) jeweils sechzehn Pole haben.

2. Aktuator (2) gemäß Anspruch 1, **wobei** auf den beiden Seiten des Linsenhalters (3) jeweils vier gedruckte Spulen (5) für die Fokusregelung und jeweils zwei gedruckte Spulen (6) für die Spurfolgeregelung angeordnet sind.

3. Aktuator (2) gemäß Anspruch 2, **wobei** die gedruckten Spulen (5) für die Fokusregelung auch für eine Kipp-Bewegung des Linsenhalters (3) verwendet werden.

4. Aktuator (2) gemäß einem der Ansprüche 1 bis 3, **wobei** die Polteilung der Magnete (4) zumindest teilweise schräg zu den für die Spurfolgeregelung vorgesehenen gedruckten Spulen (6) verläuft.

5. Aktuator gemäß einem der Ansprüche 1 bis 4, **wobei** die Magnete (4) aus jeweils zwei oder mehr miteinander verklebten Teilen bestehen.

6. Gerät zum Lesen und/oder Beschreiben optischer Speichermedien, **dadurch gekennzeichnet, dass** es einen optischen Abtaster (1) mit einem Aktuator (2) gemäß einem der Ansprüche 1 bis 5 verwendet.

## Revendications

1. Actionneur (2) pour tête de lecture optique (1), possédant un porte-lentille (3) permettant de maintenir une lentille de focalisation (7) et des bobines imprimées (5, 6) pour une commande de focalisation et de suivi de piste, avec les bobines imprimées (5, 6) agencées sur deux faces opposées du porte-lentille (3) et interagissant avec des aimants associés (4) **caractérisé en ce que** six bobines imprimées (5, 6) sont agencées sur chacune des deux faces du porte-lentille (3), et les aimants (4) possèdent chacun seize pôles.

2. Actionneur (2) selon la revendication 1, **dans lequel** quatre bobines imprimées (5) pour une commande de focalisation et deux bobines imprimées (6) pour une commande de suivi de piste sont agencées sur chacune des deux faces du porte-lentille (3).

3. Actionneur (2) selon la revendication 2, **dans lequel** les bobines imprimées (5) pour une commande de focalisation sont également utilisées pour une commande de panoramique vertical du porte-lentille (3).

4. Actionneur (2) selon une des revendications 1 à 3, **dans lequel** l'inclinaison du pôle des aimants (4) est oblique, au moins à certains endroits, par rapport aux bobines imprimées (6) fournies pour une commande de suivi de piste.

5. Actionneur selon une des revendications 1 à 4, **dans lequel** les aimants (4) se composent chacun de deux ou plusieurs pièces fixées l'une à l'autre de façon adhésive.

6. Dispositif de lecture et/ou d'écriture sur des supports de stockage optiques, **caractérisé en ce qu'**une tête de lecture optique (1) dotée d'un actionneur (2) selon une des revendications 1 à 5 est utilisée.
